Europäisches Patentamt

European Patent Office

Office européen des brevets

(19)

(11) Numéro de publication: **0 266 249**
**B1**

(12) # FASCICULE DE BREVET EUROPEEN

(45) Date de publication du fascicule du brevet:
**05.09.90**

(51) Int. Cl.⁵: **G01C 19/64**

(21) Numéro de dépôt: **87402253.6**

(22) Date de dépôt: **09.10.87**

(54) Interferomètre en anneau à fibres optiques à trois axes.

(30) Priorité: **14.10.86 FR 8614257**

(43) Date de publication de la demande:
**04.05.88 Bulletin 88/18**

(45) Mention de la délivrance du brevet:
**05.09.90 Bulletin 90/36**

(84) Etats contractants désignés:
**DE GB**

(56) Documents cités:
**EP-A- 0 040 004**
**US-A- 4 315 693**

(73) Titulaire: **THOMSON-CSF, 51, Esplanade du Général de Gaulle, F-92800 Puteaux(FR)**

(72) Inventeur: **Lefevre, Hervé, THOMSON-CSF SCPI 19, avenue de Messine, F-75008 Paris(FR)**

(74) Mandataire: **Lepercque, Jean et al, THOMSON-CSF SCPI, F-92045 PARIS LA DEFENSE CEDEX 67(FR)**

## Description

L'invention concerne un interféromètre à fibres optiques à trois axes permettant de réaliser des détections selon trois axes et de préférence selon trois axes orthogonaux. Ils prennent ainsi la mesure des trois composantes selon trois axes, d'une perturbation dont on ne connaît pas la direction et qui est susceptible d'affecter la propagation d'un faisceau lumineux.

Un interféromètre de l'art connu comporte principalement une source d'énergie lumineuse généralement constituée par un laser ; un dispositif optique constitué soit d'un certain nombre de miroirs, soit d'une fibre enroulée sur elle-même, ce dispositif formant guide d'onde ; un dispositif de séparation et de mélange de la lumière et un dispositif de détection et de traitement du signal détecté.

Il est connu que dans ces interféromètres, il existe deux ondes issues du dispositif séparateur et parcourant en sens opposés un même trajet optique.

Une propriété fondamentale des interféromètres en anneau est la réciprocité qui peut s'exprimer comme suit : toute perturbation du trajet optique affecte semblablement les deux ondes malgré que ces deux ondes ne la subissent pas dans le même sens.

Il existe cependant deux types de perturbations qui affectent la réciprocité.

Il s'agit, d'une part, des perturbations qui varient dans le temps, ce dans un laps de temps comparable au temps que mettent les ondes à se propager le long du chemin optique de l'interféromètre ; et, d'autre part, les perturbations dites "non réciproques", c'est-à-dire les perturbations n'ayant pas le même effet sur les ondes selon qu'elles se propagent dans un sens ou dans un autre le long du chemin optique. Il s'agit d'effets physiques qui détruisent la symétrie du milieu dans lequel se propagent les ondes.

Deux effets connus présentent ce dernier type de perturbations :
- l'effet FARADAY, ou effet magnéto-optique colinéaire, par lequel un champ magnétique crée une orientation préférentielle du spin des électrons d'un matériau optique ;
- et l'effet SAGNAC, ou effet inertiel relativiste, dans lequel la rotation de l'interféromètre par rapport à l'espace inertiel détruit la symétrie du temps de propagation. Cet effet est mis à profit pour réaliser des gyromètres notamment.

En l'absence de manifestation de perturbations "non réciproques", la différence de phase entre les deux ondes qui se recombinent dans le dispositif de séparation et de mélange après avoir parcouru le chemin optique est nulle. Le dispositif de détection et de traitement détecte des signaux représentant la puissance optique de l'onde composite obtenue après recombinaison.

Lorsqu'on ne connaît pas la direction de la perturbation à mesurer, pour mesurer la valeur de cette perturbation et connaître sa direction, on doit, selon l'art connu, effectuer des mesures selon plusieurs directions ou avoir recours à plusieurs interféromètres.

Par rapport à l'art connu, l'interféromètre de l'invention se différencie par fait qu'il prévoit le multiplexage série de trois axes différents dans un interféromètre à fibre qui n'utilise qu'une seule source, un seul détecteur et un seul circuit optique intégré comprenant une jonction Y, un modulateur de phase et un polariseur. Cette conception permet bien sûr une réduction de la connectique électrique ce qui augmente la compacité de l'ensemble.

L'invention concerne donc un interféromètre à fibres optiques à trois axes comprenant une première fibre optique monomode formant un premier anneau disposé selon un premier axe, des moyens d'émission d'un rayonnement d'énergie lumineuse cohérente d'une longueur d'onde déterminée, des premiers moyens de séparation et de mélange du rayonnement pour diriger, simultanément et par parties égales, l'énergie lumineuse cohérente émise vers une première et une deuxième extrémités de la première fibre optique monomode, pour recombiner sous forme d'un rayonnement d'interférence des rayonnements émergeant des deux extrémités de la fibre optique monomode et pour retransmettre ce rayonnement d'interférence à un moyen photodétecteur d'interférences caractérisé en ce qu'il comprend également :
- une deuxième fibre optique monomode formant un deuxième anneau disposé selon un deuxième axe et possédant une première et une deuxième extrémités ;
- un premier moyen de couplage permettant de coupler lesdites extrémités de la deuxième fibre à une portion de la première fibre de façon, d'une part, qu'une partie du rayonnement circulant selon un premier sens dans la première fibre soit captée par la première extrémité de la deuxième fibre et qu'une partie du rayonnement circulant selon un sens inverse au premier soit captée par la deuxième extrémité de la deuxième fibre, lesdites parties de rayonnement étant retransmises à la première fibre après circulation dans la deuxième fibre ;
- une troisième fibre optique monomode formant un troisième anneau disposé selon un troisième axe et possédant une première et une deuxième extrémités ;
- un deuxième moyen de couplage permettant de coupler lesdites extrémités de la troisième fibre à une portion de la deuxième fibre de façon qu'une partie du rayonnement circulant selon un premier sens dans la deuxième fibre soit captée par une extrémité de la troisième fibre et qu'une partie du rayonnement circulant selon un sens inverse au premier soit captée par l'autre extrémité de la troisième fibre, lesdites parties de rayonnement étant retransmises à la deuxième fibre après circulation dans la troisième fibre.

Les différents objets et caractéristiques de l'invention apparaîtront plus clairement dans la description qui va suivre faite en se rapportant aux figures annexées qui représentent :

- la figure 1, un exemple de réalisation d'interféromètre selon l'art connu ;
- la figure 2, un autre exemple de réalisation d'interféromètre selon l'art connu ;
- la figure 3, un exemple de réalisation d'interféromètre selon l'invention ;

- la figure 4, un autre exemple de réalisation d'interféromètre selon l'invention ;
- la figure 5, un exemple de disposition des bobines de fibres selon l'invention ;
- les figures 6 à 10, des diagrammes de signaux illustrant le fonctionnement d'un interféromètre selon l'invention.

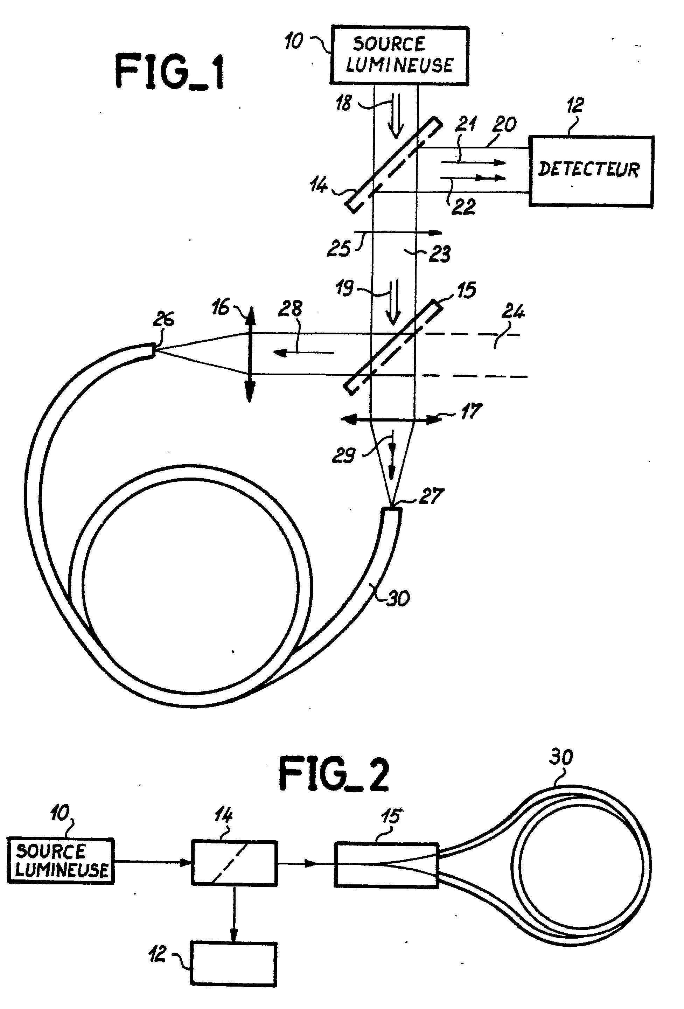

La figure 1 montre un schéma de principe d'un interféromètre en anneau selon l'art connu tel que décrit dans la demande de brevet français n° 80.21677 déposée le 10 octobre 1980. Son trajet optique est réalisé en fibre optique monomode, mais le coeur de cet interféromètre est constitué d'éléments optiques traditionnels.

L'entrée de l'anneau est matérialisée par la lame semi-transparente 15. Le faisceau incident 19 provenant de la source 10 arrive sur la lame semi-transparente 15. Il a préalablement traversé la lame semi-transparente 14. La lame semi-conductrice 15 réfléchit une partie du faisceau incident 19 dans l'extrémité 26 d'une fibre optique 30 après focalisation par une lentille 16. Elle transmet l'autre partie dans l'autre extrémité 27 de la fibre 30, après focalisation par une lentille 17.

Le premier faisceau 28 parcourt l'anneau de l'interféromètre dans un sens, tandis que l'autre faisceau 29 le parcourt en sens inverse. Ces deux faisceaux arrivent alors sur la lame semi-transparente 15.

Le premier faisceau 28 est transmis dans le bras 23 de l'interféromètre, est réfléchi en partie dans le bras 24. Il en est de même pour le deuxième faisceau. Deux portions de ces deux faisceaux interfèrent donc dans le bras 23.

En l'absence de perturbations non réciproques dans l'anneau, l'interférence des deux faisceaux reçus en retour dans le bras 23, donne lieu à un signal de valeur maximale.

En intercalant un filtre de mode, non représenté, dans le bras 23 on rend l'interféromètre strictement réciproque ; il est parcouru par une onde contenue dans un seul mode optique.

Après parcours de la boucle optique de l'interféromètre et recombinaison par la lame séparatrice 15, la fraction d'énergie optique obtenue par interférence des deux ondes dans le bras 23 de l'interféromètre, présente une structure de mode complexe. En l'absence de phénomènes non linéaires, et, bien sûr en l'absence de phénomènes non réciproques proprement dits, la fraction d'énergie contenue, à l'aller comme au retour dans ce même mode est linéairement indépendante du reste d'énergie optique : tout se passe comme si ce reste d'énergie n'existait pas, et les conditions d'unicité de mode nécessaires et suffisantes à une réciprocité rigoureuse du dispositif sont suffisantes.

Ainsi les deux faisceaux après avoir parcouru la fibre en sens inverses sont repris par le bras 23 de l'interféromètre, par la lame semi-transparente 15 et sont séparés du faisceau incident 19, par la lame semi-transparente 14 qui les envoie en partie dans le bras 20 dans lequel on détecte le signal d'interférence, sur le détecteur 12.

Le système peut être réalisé, comme cela est représenté en figure 2, à l'aide de composants dont certains sont fabriqués à l'aide des techniques d'optique intégrée.

Sur cette figure on a référencé de la même façon que sur la figure 1 les éléments remplissant la même fonction dans les deux systèmes. On retrouve sur cette figure la source 10, l'anneau de l'interféromètre 30, le détecteur 12. La lame séparatrice 14 de la figure 1 a été réalisée sous la forme d'un dérivateur tel que décrit dans la demande de brevet n° 85.16600 déposée le 8 novembre 1985. La lame séparatrice 15 de la figure 1 a été réalisée également en optique intégrée sous forme d'un séparateur bien connu dans la technique. Les liaisons entre les différents éléments de la figure 2 peuvent également être réalisé en optique intégrée à l'aide de guides d'ondes bien connus dans la technique.

Pour mesurer une perturbation dont on ne connaît pas la direction, selon les techniques connues, on doit effectuer des mesures selon plusieurs directions connues (trois par exemple) pour connaître les composantes de la perturbation selon ces directions, ou bien ce qui revient au même disposer de plusieurs interféromètres tels que décrits précédemment et orientés selon des directions connues. Le système de l'invention permet d'effectuer une telle mesure avec un seul appareil ne comportant qu'une seule source lumineuse et qu'un seul détecteur.

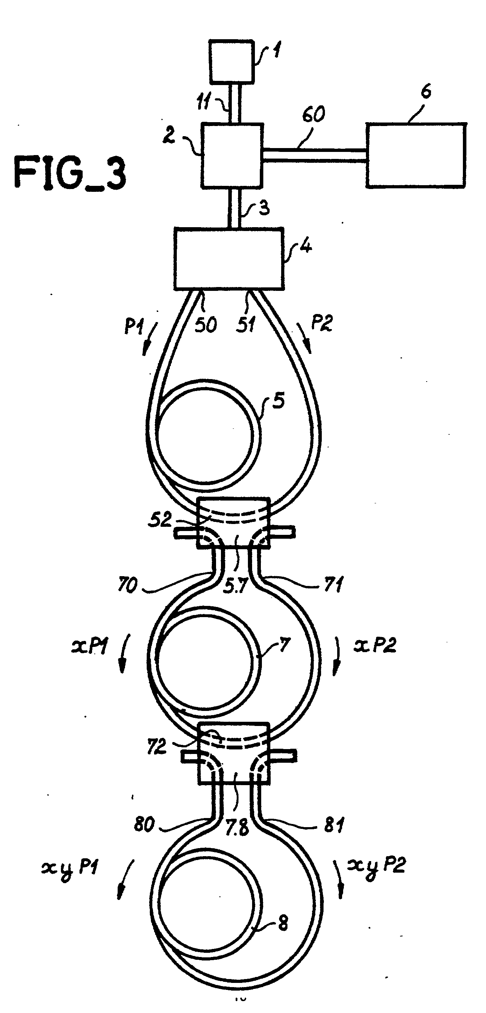

En se reportant à la figure 3, on va décrire un exemple de réalisation d'un tel interféromètre.

Cet interféromètre possède une source lumineuse 1 émettant un faisceau de lumière polarisée. Un dérivateur 2, tel que le dérivateur 14 de la figure 2, reçoit ce faisceau de lumière par un guide de lumière 11. Un séparateur 4 est couplé par un guide de lumière 3 au dérivateur 2 et reçoit de celui-ci le faisceau de lumière émis par la source 1. Par contre, le dérivateur 2 retransmet à un détecteur 6, par un guide de lumière 60 tout ou partie d'un rayonnement lumineux provenant du séparateur 4. Le détecteur 6 peut être également associé directement au dérivateur 2.

Le séparateur 4 sépare le faisceau provenant de la source 1 en deux parties. Chaque partie du faisceau est transmise à une extrémité 50 et 51 d'une fibre optique 5. La fibre 5 qui a été représentée sous forme d'une boucle est donc parcourue par deux ondes contrarotatives P1 et P2.

Une portion 52 de la fibre 5 est couplée à l'aide d'un dispositif de couplage 5.7 aux deux extrémités 70 et 71 d'une fibre 7 également représentée sous forme d'une boucle. Ce couplage se fait de telle façon que l'onde lumineuse P1 provenant de l'extrémité 50 est couplée à l'extrémité 70 de la fibre 7. Une fraction xP1 de l'onde lumineuse P1 est donc transmise sur la fibre 7 et la parcourt comme cela est indiquée sur la figure. L'autre fraction (1-x) P1, non représentée sur la figure continue son parcours dans la fibre 5 vers l'extrémité 51.

Le dispositif de couplage 5.7 permet également de coupler l'onde lumineuse P2 provenant de l'extrémité 51 à l'extrémité 71 de la fibre 7. Une fraction xP2 de l'onde lumineuse P2 est donc transmise sur la fibre 7 et la parcourt comme cela est indiqué sur la figure. L'autre fraction (1-x) P2, non représentée sur la figure continue son parcours dans la fibre 5 vers l'extrémité 50.

Une portion 72 de la fibre 7 est couplée de manière similaire, à l'aide d'un dispositif de couplage 7.8 aux deux extrémités 80 et 81 d'une fibre 8 également représentée sous forme d'une boucle. Ce couplage est tel qu'une fraction xyP1 de l'onde xP1 est transmise sur la fibre 8 et la parcourt comme cela est indiqué sur la figure 3.

L'autre fraction (1-y) xP1 de l'onde xP1 continue son parcours dans la fibre 7 vers l'extrémité 71.

Le couplage du dispositif 7.8 est également tel qu'une fraction xyP2 de l'onde xP2 est transmise sur la fibre 8 et la parcourt comme cela est indiqué sur la figure 3. L'autre fraction (1-y)xP2 de l'onde xP2 continue son parcours dans la fibre 7 vers l'extrémité 70.

Les fractions d'ondes (1-y)xP1 et (1-y)xP2 atteignent les extrémités 71 et 70 respectivement et sont couplées par le dispositif de couplage 5.7 à la fibre 5. Une partie de ces fractions d'ondes est retransmise sur la fibre 5 vers les extrémités 50 et 51.

Les fractions d'ondes xyP1 et xyP2, après parcours de la fibre 8, atteignent les extrémités 81 et 80 respectivement et sont couplées à la fibre 7. Une partie de ces fractions d'ondes est retransmise sur la fibre 7 et parcourt celle-ci jusqu'aux extrémités 70 et 71 où le dispositif de couplage 5.7 en retransmet à nouveau une partie sur la fibre 5 vers les extrémités 50 et 51.

Le séparateur 4 reçoit donc différentes ondes en retour et les retransmet au dérivateur 2 qui les retransmet au détecteur 6.

Sur la figure 3, les dispositifs de couplage 5.7 et 7.8 sont représentés chacun en une seule pièce. Cependant, selon un mode de réalisation préféré de l'invention ils sont réalisés chacun à l'aide de deux coupleurs 5.70 et 5.71 pour le dispositif 5.7, et 7.80 et 7.81 pour le dispositif 7.8. Ces coupleurs peuvent être réalisés de manière connue dans la technique. Par exemple, ils peuvent être réalisés de façon intégrée comme cela est décrit dans la demande de brevet 80.21677 déposée le 10 octobre 1980.

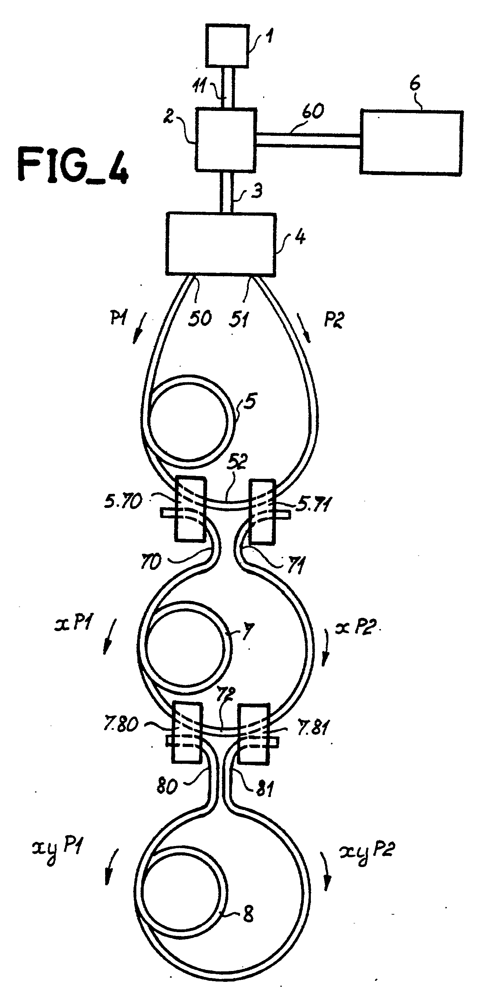

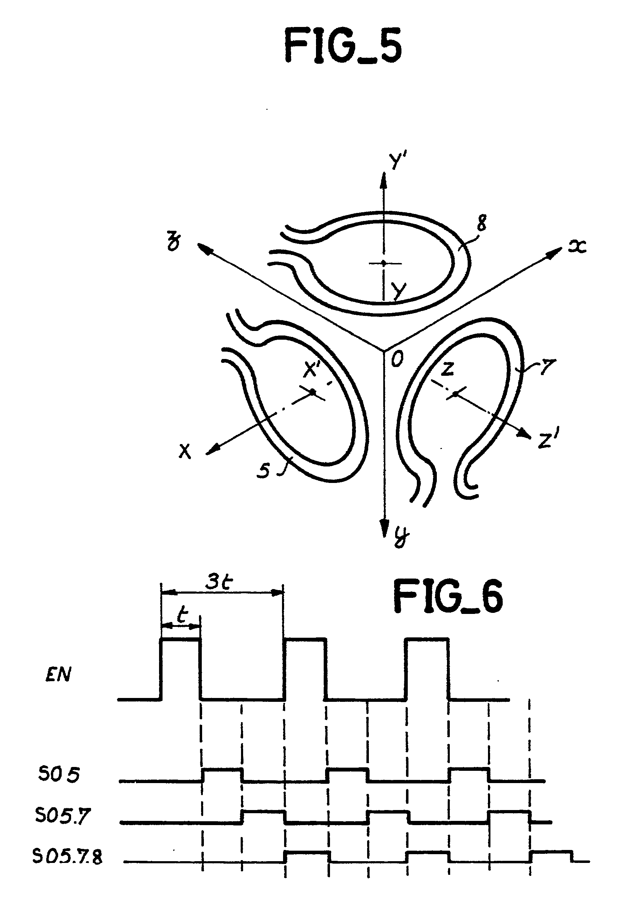

Sur les figures 3 et 4, pour des raisons de facilités de représentation, les trois fibres 5, 7, 8 ont été représentées dans un même plan. Cependant, pour pouvoir mesurer les composantes d'une perturbation selon plusieurs directions, on doit les disposer selon des plans différents. Par exemple, comme représenté en figure 5, une réalisation préférée de l'invention consistera à disposer les boucles de fibres 5, 7, 8 dans des plans zOy, xOy et xOz respectivement.

Les boucles de fibres 5, 7, 8 permettent de mesurer des composantes de perturbation selon les axes XX', YY', ZZ' de ces boucles orthogonaux entre eux.

Les boucles de fibres 5, 7, 8 seront réalisées sous forme de bobines de façon à avoir une grande longueur de fibre dans un petit volume.

En choisissant des bobines de longueur égale et en modulant l'intensité de la source 1 avec une porte de durée t et de temps de répétition 3t où t est le temps de propagation dans une bobine (1us pour 200 mètres), la lumière ayant suivi les différents chemins revient à des temps différents ce qui permet de multiplexer en série dans le temps le signal créé par la rotation de chaque bobine.

Sur la figure 6 on a représenté un signal lumineux EN émis par la source lumineuse 1 de durée t et de période de répétition 3t.

Comme expliqué précédemment une onde lumineuse émise par la source 1 est transmise aux deux extrémités 50 et 51 de la fibre 5 et revient, du moins en partie, après avoir parcouru soit la fibre 5 seule, soit la fibre 5 et la fibre 7, soit encore les trois fibres 5, 7 et 8.

Après parcours de la fibre 5 seule, le signal recueilli est représenté sur la ligne S05. En réalisé, le signal de la ligne S05 représente l'interférence des ondes contrarotatives ayant parcouru la fibre 5. La durée de propagation dans la fibre 5 étant de durée t, égale à la durée du signal EN, le signal S05 est décalé d'un temps t par rapport au signal EN.

Après parcours des fibres 5 et 7, le signal recueilli est représenté sur la ligne S05.7. Ce signal représente également une interférence des ondes contrarotatives ayant parcouru les ribres 5 et 7. Il est décalé de 2t par rapport au signal EN.

Enfin, après parcours des fibres 5, 7 et 8, le signal est représenté sur la ligne S05.7.8 et représente l'interférence des ondes contrarotatives après parcours des fibres 5, 7 et 8. Ce signal est décalé de 3t par rapport au signal EN.

La demande de brevet français n° 84.09311 déposée le 14 juin 1984 décrit un dispositif de mesure de déphasage dans un interféromètre en anneau en utilisant un système à rampe de phase. En utilisant ce système, le détecteur 6 qui reçoit les signaux S05, S05.7 et S05.7.8 peut effectuer une mesure par rampe de phase.

Pour cela, une modulation de phase en carrée de période 6t et dont la commutation a lieu juste avant l'entrée de la lumière permet la mise au biais des 3 interféromètres multiplexés.

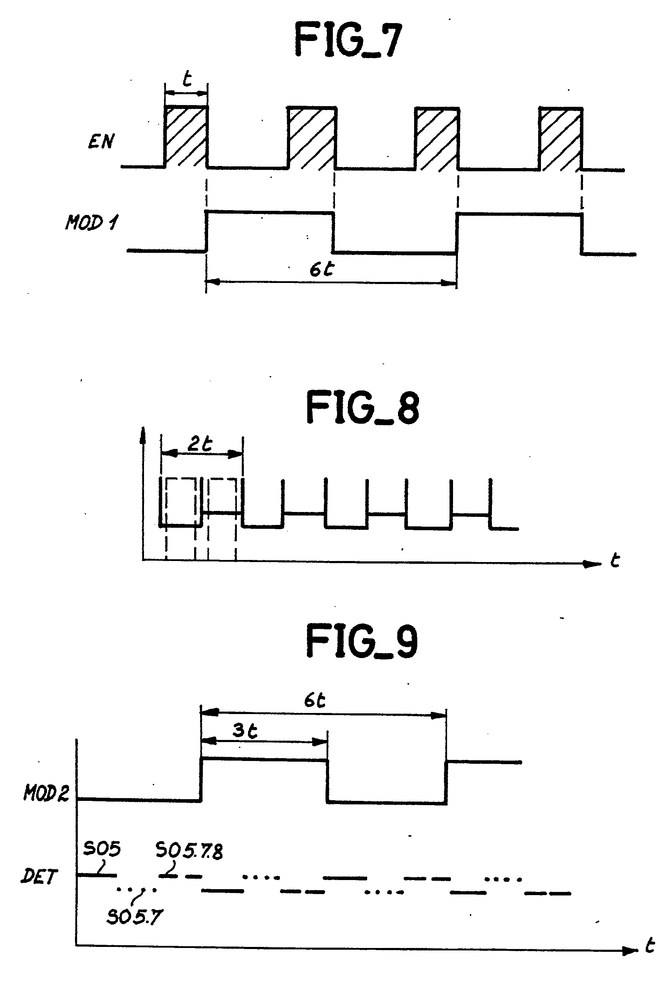

Sur la figure 7, on a représenté le signal EN de la figure 6 et le signal de modulation MODI de période 6t.

Dans un gyromètre à un axe le signal de rotation obtenu avec une modulation de phase de période 2t est représenté en figure 8.

Selon l'invention, le signal des trois fibre étant modulé par un signal de période 6t, tel que celui représenté par le signal MOD2 de la figure 9, les signaux obtenus après par parcours des fibres sont représentés sur la ligne DET de la figure 9. Sur cette ligne DET, le signal n'ayant parcouru que la fibre 5 est représenté par un trait continu ; le signal ayant parcouru les fibres 5 et 7 est représenté par un pointillé ; le signal ayant parcouru les fibres 5, 7 et 8 est représenté par des traits longs.

La méthode de contre-réaction par rampe de phase numérique décrite dans la demande de brevet français n °84.09311 reste donc valable. La rampe synchrone avec la modulation compense la rotation de la bobine 5 pour le chemin 5 mais aussi 5+7 et 5+7+8. La rampe retardée de t compense la bobine 7 pour les chemins 5+7 et 5+7+8. Celle retardée de 2t compense la bobine 8 pour le chemin 5+7+8.

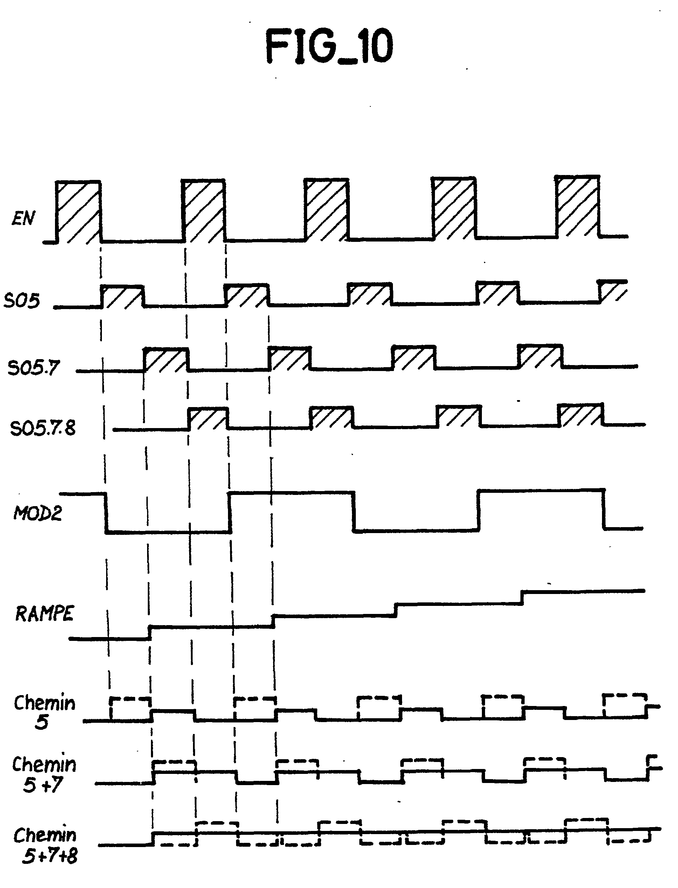

A titre d'exemple, la figure 10 donne le cas de la deuxième rampe retardée de t. Cette rampe n'agit pas sur le chemin de la bobine 5 car il n'y a pas de lumière quand cette rampe crée un déphasage. Elle agit par contre sur les chemins des bobines 5+7 et 5+7+8.

Du point de vue de la puissance lumineuse, le système est optimisé quand les coupleurs entre les fibres 5 et 7 sont de 1/3 transmis 2/3 couplé et ceux entre les fibres 7 et 8 de 1/2 - 1/2 . Ne revient de chaque chemin que 1/9 ème de la puissance qu'il y aurait dans un gyromètre 1 - axe en négligeant les pertes additionnelles des bobines et des coupleurs. Le système étant limité par le bruit photonique ceci réduit le rapport signal à bruit d'un facteur 3.

Notons enfin que pour éviter les problèmes de rayonnement électromagnétique et de boucle de masse, le signal lumineux extrait du dérivateur peut être couplé dans une fibre multimode qui enverra ce signal sur un détecteur solidaire de l'électronique de traitement.

Enfin, selon un exemple de réalisation préférée de l'invention, les coupleurs 5.70, 5.71, 5.80, 5.81 seront situés au milieu de bobines 5 et 7 pour établir une symétrie et pour éviter par exemple que les différences de température apporte des défauts.

Il est bien évident que la description qui précède n'a été faite qu'à titre d'exemple. D'autres exemples de réalisation peuvent être envisagées sans sortir du cadre de l'invention.

## Revendications

1. Interferomètre à fibre optique à trois axes comprenant une première fibre optique monomode (5) formant un premier anneau disposé selon un premier axe (XX'), des moyens d'émission (1) d'un rayonnement d'énergie lumineuse cohérente d'une longueur d'onde déterminée, des premiers moyens de séparation et de mélange (2, 4) du rayonnement pour diriger, simultanément et par parties égales, l'énergie cohérente émise vers une première et une deuxième extrémités (50, 51) de cette première fibre optique monomode (5), pour recombiner sous forme d'un rayonnement d'interférence des rayonnements émergeant des deux extrémités (50, 51) de cette première fibre optique monomode (5) et pour retransmettre ce rayonnement d'interférence à un moyen photodétecteur d'interférences (6) caractérisé en ce qu'il comprend également :
- une deuxième fibre optique monomode (7) formant un deuxième anneau disposé selon un deuxième axe (YY') et possédant une première et une deuxième extrémités (70, 71) ;
- un premier moyen de couplage (5.7) permettant de coupler lesdites extrémités (70, 71) de la deuxième fibre (7) à une portion (52) de la première fibre (5) de façon, d'une part, qu'une partie du rayonnement circulant selon un premier sens dans la première fibre (5) soit captée par la première extrémité (70) de la deuxième fibre (7) et qu'une partie du rayonnement circulant selon un sens inverse au premier soit captée par la deuxième extrémité (71) de la deuxième fibre, lesdites parties de rayonnement étant retransmises à la première fibre (5) après circulation dans la deuxième fibre (7) ;
- une troisième fibre optique monomode (8) formant un troisième anneau disposé selon un troisième axe (ZZ') et possédant une première et une deuxième extrémités (80, 81) ;
- un deuxième moyen de couplage (7.8) permettant de coupler lesdites extrémités (80, 81) de la troisième fibre (8) à une portion (72) de la deuxième fibre (7) de façon qu'une partie du rayonnement circulant selon un premier sens dans la deuxième fibre (7) soit captée par une extrémité (80) de la troisième fibre (8) et qu'une partie du rayonnement circulant selon un sens inverse au premier soit captée par l'autre extrémité (81) de la troisième fibre, lesdites parties de rayonnement étant retransmises à la deuxième fibre (7) après circulation dans la troisième fibre (8).

2. Interféromètre à fibres optiques selon la revendication (1), caractérisé en ce que le premier axe (XX'), le deuxième axe (YY') et le troisième axe (ZZ') ne sont pas parallèles entre eux.

3. Interféromètre à fibres optiques selon la revendication 2, caractérisé en ce que les premier, deuxième et troisième axes sont orthogonaux entre eux.

4. Interféromètre à fibre optiques selon la revendication 1, caractérisé en ce que :
- le premier moyen de couplage comporte, d'une part, un premier coupleur qui couple la première extrémité (70) de la deuxième fibre (7) à la première fibre (5) de façon à capter une partie du rayonnement se propageant selon le premier sens de propagation ainsi qu'à retransmettre une partie au moins d'un rayonnement issue de cette première extrémité sur la première fibre selon le deuxième sens de propagation et, d'autre part, un deuxième coupleur qui couple la deuxième extrémité (71) de la deuxième fibre (7) de façon à capter une partie du rayonnement se propageant selon le deuxième sens de propagation et à retransmettre sur la première fibre, selon le premier sens de propagation, un rayonnement issue de la deuxième extrémité ;
- le deuxième moyen de couplage comporte, d'une part, un troisième coupleur qui couple la première extrémité (80) de la troisième fibre (8) à la deuxième fibre (7) de façon à capter une partie du rayonnement provenant du premier sens de propagation et à retransmettre sur la deuxième fibre (7) un rayonnement issue de la première extrémité de la troisième fibre, et, d'autre part un quatrième coupleur qui couple la deuxième extrémité (81) de la troisième fibre (8) de façon à capter une partie du rayonnement provenant du deuxième sens de propagation et à retransmettre sur la deuxième fibre (7) un rayonnement issue de la deuxième extrémité (81) de la troisième fibre (8).

5. Interféromètre à fibres optiques selon la revendication 4, caractérisé en ce que les coefficients de couplage du premier coupleur et deuxième coupleur de la première fibre vers chacune des extrémités de la deuxième fibre sont tous deux sensiblement égaux à deux tiers.

6. Interféromètre à fibres optique selon la revendication 4, caractérisé en ce que les coefficients de couplage du troisième coupleur et du quatrième coupleur de la deuxième fibre vers chacune des extrémités de la troisième fibre sont tous deux sensiblement égaux à un demi.

7. Interféromètre à fibres optiques selon la revendication 1, caractérisé en ce que la première fibre, la deuxième fibre et la troisième fibre sont de longueurs égales.

8. Interféromètre à fibres optiques selon la revendication 7, dans lequel le temps de propagation dans chaque bobine d'une impulsion lumineuse a une valeur de temps (t) déterminée, caractérisé en ce que l'intensité de la source (1) est modulée à l'aide d'une porte de durée égale à ladite valeur de temps (t) déterminée et que le temps de répétition de fonctionnement de la porte est égal à trois fois la valeur de temps (t) déterminée.

9. Interféromètre à fibres optiques selon la revendication 8, caractérisé en ce que le moyen photodétecteur d'interférences (6) comprend des moyens de détection par modulation de phase dont la modulation de phase a pour période une valeur égale à six fois ladite valeur de temps (t) déterminée.

10. Interféromètre à fibres optiques selon l'une quelconque des revendications 8 et 9, caractérisé en ce que des rampes de phase numériques retardées permettent un fonctionnement en boucle fermée du système.

**Claims**

1. An optical fiber 3-axes interferometer comprising a first monomode optical fiber (5) constituting a first ring dissposed along a first axis (XX'), source means (1) for transmitting a coherent light energy radiation of a given wavelength, first separation and mixing means (2, 4) for the radiation in order to direct simultaneously and by equal parts the transmitted coherent energy towards a first and a second end (50, 51) of this first optical monomode fiber (5) in order to recombine the radiations emerging from the two ends (50, 51) of this first optical monomode fiber in the form of an interference radiation, and to retransmit this interference radiation to an interfe-rence photodetector means (6), characterized in that it further includes
– a second optical monomode fiber (7) constituting a second ring disposed along a second axis (YY') and having a first and a second end (70, 71),
– a first coupling means (5, 7) intended to couple said ends (70, 71) of the second fiber (7) to a portion (52) of the first fiber (5) such that on the one hand, a portion of the radiation circulating in the first fiber (5) along a first direction is received by the first end (70) of the second fiber (7) and that a portion of the radiation circulating along an inverse direction to the first one is received by the second end (71) of the second fiber, said radiation portions being retransmitted to the first fiber (5) after having transversed the second fiber (7),
– a third optical monomode fiber (8) constituting a third ring disposed along a third axis (ZZ') and having a first and a second end (80, 81),
– a second coupling means (7, 8) intended to couple said ends (80, 81) of the third fiber (8) to a portion (72) of the second fiber (7) in such a way that a portion of the radiation circulating along a first direction in the second fiber (7) is received by an end (80) of the third fiber (8) and that a portion of the radiation circulating along an opposite direction to the first one is received by the other end (81) of the third fiber, said radiation portions being retransmitted to the second fiber (7) after having circulated through the third fiber (8).

2. An optical fiber interferometer according to claim 1, characterized in that the three axes (XX', YY', ZZ') are not parallel to each other.

3. An optical fiber interferometer according to claim 2, characterized in that the three axes are perpendicular to each other.

4. An optical fiber interferometer according to claim 1, characterized in that
– the first coupling means comprises, firstly, a first coupler which couples the first end (70) of the second fiber (7) to the first fiber (5) in order to receive a portion of the radiation conveyed along the first direction of propagation and to retransmit at least a portion of a radiation issuing from said first end to the first fiber along the second direction of propagation, and, secondly, a second coupler which couples the second end (71) of the second fiber (7) in order to receive a portion of the radiation conveyed along the second direction of propagation and to retransmit to the first fiber, along the first direction of propagation, a radiation issuing from the second end,
– the second coupling means comprises, firstly, a third coupler which couples the first end (80) of the third fiber (7) to the second fiber (7) in order to receive a portion of the radiation coming from the first direction of propagation and to retransmit to the second fiber (7) a radiation issuing from said first end of the third fiber, and, secondly, a fourth coupler which couples the second end (81) of the third fiber (8) in order to receive a portion of the radiation coming from the second direction of propagation and to retransmit to the second fiber (7) a radiation issuing from the second end (81) of the third fiber (8).

5. An optical fiber interferometer according to claim 4, characterized in that the coupling coefficients of the first coupler and of the second coupler of the first fiber towards each one of the ends of the second fiber are both substantially equal to 2/3.

6. An optical fiber interferometer according to claim 4, characterized in that the coupling coefficients of the third coupler and of the fourth coupler of the second fiber towards each one of the ends of the third fiber are both substantially equal to 0.5.

7. An optical fiber interferometer according to claim 1, characterized in that the first fiber, the second fiber and the third fiber are of equal lengths.

8. An optical fiber interferometer according to claim 7, in which the propagation time of a light pulse in each coil has a given time value (t), characterized in that the intensity of the source (1) is modulated by means of a gate of a duration equal to said given time value (t) and that the operational repetition time of the gate is equal to three times said given time value (t).

9. An optical fiber interferometer according to claim 8, characterized in that the interference photodetector means (6) comprises detection means operating by phase modulation whose phase modulation has a period equal to six times said given time value (t).

10. An optical fiber interferometer according to any one of claims 8 and 9, characterized in that delayed digital phase slopes enable the system to operate in a closed loop.

**Patentansprüche**

1. Dreiachsiges Lichtleitfaser-Interferometer mit einer ersten optischen Monomode-Faser (5), die einen ersten gemäß einer ersten Achse (XX') ausgerichteten Ring bildet, mit Sendemitteln (1) zum Aussenden einer kohärenten Lichtenergiestrahlung einer gegebenen Wellenlänge, mit ersten Strahlungstrenn- und Mischmitteln (2, 4), um gleichzeitig und zu gleichen Teilen die ausgesandte kohärente Strahlungsenergie an ein erstes und ein zweites Ende (50, 51) dieser ersten Monomode-Lichtleitfaser (5) zu koppeln, derart, daß die aus den beiden Enden (50, 51) dieser ersten Monomode-Lichtleitfaser (5) austretenden Strahlungen in Form einer Interferenzstrahlung rekombiniert werden und diese Interferenzstrahlung an ein Interferenzphotodetektormittel (6) übertragen wird, dadurch gekennzeichnet, daß es außerdem aufweist
- eine zweite Monomode-Lichtleitfaser (7), die einen zweiten gemäß einer zweiten Achse (YY') ausgerichteten Ring bildet und ein erstes und ein zweites Ende (70, 71) besitzt,
- ein erstes Koppelmittel (5, 7), mit dem die Enden (70, 71) der zweiten Faser (7) an einen Bereich (52) der ersten Faser (5) gekoppelt werden können, derart, daß einerseits ein Teil der in einer Richtung in der ersten Faser (5) übertragenen Strahlung vom ersten Ende (70) der zweiten Faser (7) aufgenommen wird und daß ein Teil der in entgegengesetzten Richtung zur ersten Richtung übertragenen Strahlung vom zweiten Ende (71) der zweiten Faser aufgenommen wird, wobei diese Strahlungen nach Durchlaufen der zweiten Faser (7) an die erste Faser (5) zurückübertragen werden,
- eine dritte Monomode-Lichtleitfaser (8), die einen dritten gemäß einer dritten Achse (ZZ') ausgerichteten Ring bildet und ein erstes und ein zweites Ende (80, 81) besitzt,
- ein zweites Koppelmittel (7, 8), mit dem die Enden (80, 81) der dritten Faser (8) an einen Bereich (72) der zweiten Faser gekoppelt werden können, derart, daß ein Teil der in der zweiten Faser (7) in einer ersten Richtung verlaufenden Strahlung vom ersten Ende (80) der dritten Faser (8) empfangen wird, und daß ein Teil der in dazu entgegengesetzter Richtung verlaufenden Strahlung vom anderen Ende (81) der dritten Faser empfangen wird, wobei diese Teile nach Durchlauf der dritten Faser (8) wieder an die zweite Faser (7) übermittelt werden.

2. Interferometer mit Lichtleitfasern nach Anspruch 1, dadurch gekennzeichnet daß die drei Achsen (XX', YY', ZZ') nicht zueinander parallel verlaufen.

3. Interferometer mit Lichtleitfasern nach Anspruch 2, dadurch gekennzeichnet, daß die drei Achsen aufeinander senkrecht stehen.

4. Interferometer mit Lichtleitfasern nach Anspruch 1, dadurch gekennzeichnet, daß
- das erste Koppelmittel einerseits einen ersten Koppler aufweist, der das erste Ende (70) der zweiten Faser (7) so an die erste Faser (5) koppelt, daß dieses einen Teil der in der ersten Richtung übertragenen Strahlung empfängt und mindestens einen Teil einer von diesem ersten Ende ausgehenden Strahlung an die erste Faser gemäß der zweiten Richtung überträgt, und andererseits einen zweiten Koppler aufweist, der das zweite Ende (71) der zweiten Faser (7) so koppelt, daß dieses einen Teil der gemäß der zweiten Richtung verlaufenden Strahlung empfängt und an die erste Faser gemäß der ersten Richtung eine von diesem zweiten Ende ausgehende Strahlung überträgt,
- das zweite Koppelmittel einerseits einen dritten Koppler aufweist, der das erste Ende (80) der dritten Faser (8) an die zweite Faser (7) derart koppelt daß dieses einen Teil der aus der ersten Richtung kommenden Strahlung empfängt und an die zweite Faser (7) eine vom ersten Ende (80) der dritten Faser ausgehende Strahlung überträgt, und andrerseits einen vierten Koppler aufweist, der das zweite Ende (81) der dritten Faser (8) so ankoppelt, daß dieses einen Teil der aus der zweiten Richtung ankommenden Strahlung empfängt und an die zweite Faser (7) eine vom zweiten Ende (81) der dritten Faser (8) ausgehende Strahlung überträgt.

5. Interferometer mit Lichtleitfasern nach Anspruch 4, dadurch gekennzeichnet, daß die beiden Kopplungskoeffizienten des ersten und des zweiten Kopplers der ersten Faser in Richtung auf jedes der Enden der zweiten Faser im wesentlichen je den Wert 2/3 besitzen.

6. Interferometer mit Lichtleitfasern nach Anspruch 4, dadurch gekennzeichnet, daß die beiden Kopplungskoeffizienten des dritten und vierten Kopplers der zweiten Faser in Richtung auf jedes der Enden der dritten Faser je im wesentlichen den Wert 0,5 besitzen.

7. Interferometer mit Lichtleitfasern nach Anspruch 1, dadurch gekennzeichnet, daß die erste Lichtleitfaser, die zweite Lichtleitfaser und die dritte Lichtleitfaser alle gleich lang sind.

8. Interferometer mit Lichtleitfasern nach Anspruch 7, in dem die Fortpflanzungszeit eines Lichtimpulses in jeder Spule einen gegebenen Wert (t) besitzt, dadurch gekennzeichnet, daß die Intensität der Quelle (1) mit Hilfe eines Tors einer Dauer gleich dem Wert (t) moduliert wird und daß die Wiederholperiode des Tores dem Dreifachen des gegebenen Werts (t) gleich ist.

9. Interferometer init Lichtleitfasern nach Anspruch 8, dadurch gekennzeichnet, daß das Interferenzphotodetektormittel (6) Erfassungsmittel durch Phasenmodulation besitzt, deren Phasenmodulation eine Periode dem Sechsfachen des gegebenen Wert (t) gleicht.

10. Interferometer mit Lichtleitfasern nach einem beliebigen der Ansprüche 8 und 9, dadurch gekennzeichnet, daß digitale verzögerte Phasenrampen einen Betrieb des Systems in geschlossener Schleife erlauben.

EP 0 266 249 B1

FIG_1

SOURCE LUMINEUSE

DETECTEUR

FIG_2

SOURCE LUMINEUSE

FIG_3

**FIG_4**

# FIG_5

# FIG_6

# FIG_7

# FIG_8

# FIG_9

# FIG_10